# EUROPEAN PATENT APPLICATION

(11) **EP 4 742 412 A1**
(43) Date of publication of application: **13.05.2026**
(21) Application number: 25213992.8
(22) Date of filing: 06.11.2025
(51) Int. Cl.: H01M 50/42, H01M 50/443, H01M 50/449, H01M 50/457, H01M 50/46

(54) **SEPARATOR FOR RECHARGEABLE LITHIUM BATTERY AND RECHARGEABLE LITHIUM BATTERY INCLUDING THE SAME**

(30) Priority: 07.11.2024 KR 20240157089
(71) Applicant: SAMSUNG SDI CO., LTD., Yongin-si, Gyeonggi-do 17084 (KR)
(72) Inventor: Seo, Dong Wan, 16678 Suwon-si (KR); Kim, Ga In, 16678 Suwon-si (KR); Gu, Ja Yeon, 16678 Suwon-si (KR)
(74) Representative: Maiwald GmbH

(57) **Abstract**

A separator for a rechargeable lithium battery includes a porous substrate, and a coating layer located on at least one surface of the porous substrate. The coating layer includes a binder, the binder includes a copolymer including a first structural unit including a unit derived from an aromatic-based unsaturated monomer; a second structural unit derived from a (meth)acrylic monomer containing an alkyl group with 4 or more carbon atoms in the main chain of the ester moiety; and a third structural unit derived from a sulfonic acid group-containing monomer. Based on 100 mol% of the copolymer, the first structural unit is included in an amount of from about 5 mol% to about 80 mol%, the second structural unit is included in an amount of from about 10 mol% to about 40 mol%, and the third structural unit is included in an amount of from about 5 mol% to about 80 mol%.

## Description

### BACKGROUND

### 1. Field of the Disclosure

The present disclosure relates to a separator for a rechargeable lithium battery, and to a rechargeable lithium battery including the rechargeable lithium battery.

### 2. Discussion of Related Art

With increasing use of electronic devices using batteries such as, e.g., mobile phones, notebook computers, electric vehicles, and the like, the demand for secondary batteries having high energy density and high capacity is increasing. Therefore, improving the performance of rechargeable lithium batteries may be advantageous.

A rechargeable lithium battery typically includes a positive electrode and a negative electrode that contain an active material capable of the intercalation and deintercalation of lithium ions, and produces electrical energy by oxidation and reduction reactions when the lithium ions are intercalated into and deintercalated from the positive electrode and the negative electrode.

### SUMMARY

The present disclosure describes a separator for a rechargeable lithium battery that improves the capacity of a rechargeable lithium battery due to the low membrane resistance thereof.

The present also describes a separator for a rechargeable lithium battery that improves the safety and lifespan of a rechargeable lithium battery due to the high adhesion thereof.

The present also describes a separator for a rechargeable lithium battery that improves resistance due to the high electrolyte wettability and improved flexibility thereof.

The present also describes a separator for a rechargeable lithium battery that has high capacity retention rates and low direct current internal resistance (DC-IR) change rates at both room temperature and high temperature.

The present also describes a rechargeable lithium battery including the above-described separator for a rechargeable lithium battery.

According to an aspect of the present disclosure, a separator for a rechargeable lithium battery is described.
1. The separator for a rechargeable lithium battery includes a porous substrate and a coating layer located on at least one surface of the porous substrate. The coating layer includes a binder, the binder includes a copolymer including a first structural unit including a unit derived from an aromatic-based unsaturated monomer; a second structural unit derived from a (meth)acrylic monomer containing an alkyl group with 4 or more carbon atoms in the main chain of the ester moiety; and a third structural unit derived from a sulfonic acid group-containing monomer. Based on 100 mol% of the copolymer, the first structural unit is included in an amount in a range of about 5 mol% to about 80 mol%, the second structural unit is included in an amount in a range of about 10 mol% to about 40 mol%, and the third structural unit is included in an amount in a range of about 5 mol% to 80 about mol%.
2. The separator of aspect 1, wherein the copolymer comprises a particulate binder.
3. The separator of aspect 1 or 2, wherein the copolymer has an average particle size D50 in a range of from about 500 nm to about 700 nm.
4. The separator of any one of aspects 1 to 3, wherein the copolymer is an adhesive binder.
5. The separator of any one of aspects 1 to 4, wherein the copolymer has a glass transition temperature in a range of from about 60 °C to about 80 °C.
6. The separator of any one of aspects 1 to 5, wherein the copolymer is included in an amount in a range of from about 1 wt% to about 100 wt% of the coating layer.
7. The separator of any one of aspects 1 to 6, wherein the sum of the content of the first structural unit, the second structural unit, and the third structural unit is about 95 mol% or more based on the copolymer.
8. The separator of any one of aspects 1 to 7, wherein the unit derived from the aromatic-based unsaturated monomer is represented by the following Chemical Formula 1: 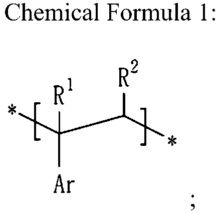 in Chemical Formula 1,
   R¹ and R² each independently comprises hydrogen or a substituted or unsubstituted C₁ to C₅ alkyl group, and
   Ar comprises a substituted or unsubstituted, monocyclic or polycyclic C₆ to C₂₀ aryl group,
   the second structural unit is represented by the following Chemical Formula 4: 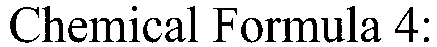 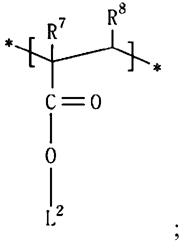
   in Chemical Formula 4,
   R⁷ and R⁸ each independently comprises hydrogen or a methyl group, and
   L² comprises a substituted or unsubstituted, straight or branched C₄ to C₃₀ alkyl group, and
   the third structural unit is represented by any one of the following Chemical Formulas 5 to 7: 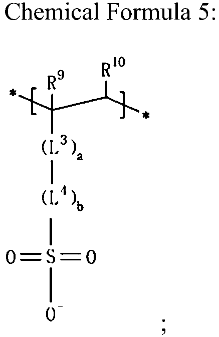 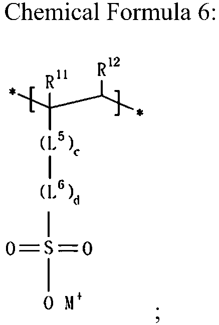 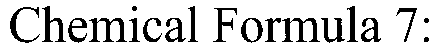 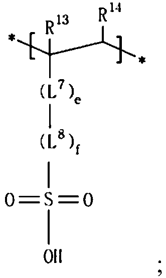
   in Chemical Formulas 5 to 7,
   R⁹, R¹⁰, R¹¹, R¹², R¹³, and R¹⁴ each independently comprises hydrogen or a C₁ to C₃ alkyl group,
   L³, L⁵, and L⁷ each independently comprises -C(=O)-, -C(=O)O-, -OC(=O)-, -O-, or -C(=O)NH-,
   L⁴, L⁶, and L⁸ each independently comprises a substituted or unsubstituted C₁ to C₁₀ alkylene group, a substituted or unsubstituted C₃ to C₂₀ cycloalkylene group, a substituted or unsubstituted C₆ to C₂₀ arylene group, or a substituted or unsubstituted C₃ to C₂₀ heterocyclic group,
   a, b, c, d, e and f are each independently an integer in a range from 0 to 2, and
   in Chemical Formula 6,
   M comprises an alkali metal.
9. The separator of any one of aspects 1 to 8, wherein the first structural unit further includes a unit derived from a (meth)acrylic monomer containing an alkyl group having 1 to 3 carbon atoms in the main chain of the ester moiety.
10. The separator of aspect 9, wherein the unit derived from the (meth)acrylic monomer is represented by the following Chemical Formula 3: 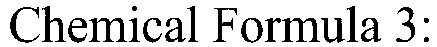 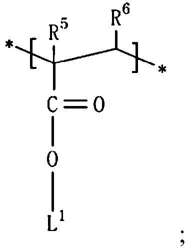 in Chemical Formula 3,
   R⁵ and R⁶ each independently comprises hydrogen or a methyl group, and
   L¹ comprises a substituted or unsubstituted, straight or branched C₁ to C₃ alkyl group.
11. The separator of aspect 9 or 10, wherein the unit derived from the aromatic-based unsaturated monomer and the unit derived from the (meth)acrylic monomer are included in a molar ratio in a range of from about 1: 0.5 to about 1 : 2.
12. The separator of any one of aspects 9 to 11, wherein based on 100 mol% of the copolymer, the structural unit derived from the aromatic-based unsaturated monomer is included in an amount in a range of from about 5 mol% to about 35 mol%, the structural unit derived from the (meth)acrylic monomer containing an alkyl group having 1 to 3 carbon atoms in the main chain of the ester moiety is included in an amount in a range of from about 5 mol% to about 35 mol%, the second structural unit is included in an amount in a range of from about 20 mol% to about 30 mol%, and the third structural unit is included in an amount in a range of from about 10 mol% to about 60 mol%.
13. The separator of any one of aspects 9 to 12, wherein the copolymer comprises:
   the structural unit derived from the aromatic-based unsaturated monomer derived from one or more of styrene, alpha-methyl styrene, 4-butyl styrene, 4-butoxy styrene, halo styrene, vinyl toluene, and vinyl naphthalene;
   the structural unit derived from the (meth)acrylic monomer containing an alkyl group having 1 to 3 carbon atoms in the main chain of the ester moiety, which is derived from one or more of methyl (meth)acrylate, ethyl (meth)acrylate, n-propyl (meth)acrylate, and iso-propyl (meth)acrylate;
   the second structural unit derived from one or more of 2-ethylhexyl (meth)acrylate, n-butyl (meth)acrylate, iso-butyl (meth)acrylate, tert-butyl (meth)acrylate, pentyl (meth)acrylate, hexyl (meth)acrylate, heptyl (meth)acrylate, n-octyl (meth)acrylate, nonyl (meth)acrylate, isononyl (meth)acrylate, decyl (meth)acrylate, and isodecyl (meth)acrylate; and
   the third structural unit derived from at least one of vinyl sulfonic acid, allyl sulfonic acid, styrene sulfonic acid, anethole sulfonic acid, (meth)acrylamidoalkane sulfonic acid, sulfoalkyl (meth)acrylate, and a salt thereof.
14. The separator of any one of aspects 1 to 13, wherein the coating layer has a thickness in a range of from about 0.1 µm to about 1.5 µm.

According to another aspect of the present disclosure, a rechargeable lithium battery is described.

The rechargeable lithium battery includes a positive electrode, a negative electrode, and the separator for a rechargeable lithium battery interposed between the positive electrode and the negative electrode.

### BRIEF DESCRIPTION OF THE DRAWINGS

The above and other objects, features and advantages of the present disclosure are more apparent to those of ordinary skill in the art by describing example embodiments thereof in detail with reference to the accompanying drawings, in which:
FIG. 1 to FIG. 4 are cross-sectional views schematically illustrating rechargeable lithium batteries according to example embodiments of the present disclosure.
FIG. 5 is a cross-sectional view illustrating a separator for a rechargeable lithium battery according to one example embodiment.

### DETAILED DESCRIPTION

Hereinafter, example embodiments of the present disclosure are described in detail. However, the embodiments are presented as examples, and the present disclosure is not limited thereto, and the present disclosure is only defined by the scope of the appended claims.

Unless otherwise stated herein, when a part such as a layer, a membrane, an area, a plate, and the like, is described as being disposed "on" another part, it includes not only a case where the part is "directly on" another part, but also a case where there are other parts therebetween.

Unless otherwise stated herein, the singular may also include the plural. In addition, unless otherwise stated, the term "A or B" may mean "including A, including B, or including A and B."

In the present specification, "a combination thereof" may mean a mixture, stack, composite, copolymer, alloy, blend, or reaction product of constituents.

Unless otherwise defined herein, "particle size D100" refers to a size of a particle with a cumulative volume of 100% by volume in a particle size distribution. The particle size D100 may be measured by methods known to those skilled in the art, and for example may be measured using a particle size analyzer, a transmission electron microscope photograph, or a scanning electron microscope photograph. As another method, the particle size D100 may be obtained by measuring the particle size using a measuring device using dynamic light scattering, performing data analysis to count the number of particles for each particle size range, and then calculating the particle size D100 therefrom. Alternatively, the particle size D100 may be measured using a laser diffraction method. When measuring the particle size by the laser diffraction method, for example, the particle size D100 based on 100% of a particle size distribution in the measuring device may be calculated by dispersing particles to be measured in a dispersion medium, then introducing the dispersion medium into a commercially available laser diffraction particle size measuring device (e.g., Microtrac's MT 3000), and radiating ultrasonic waves of about 28 kHz with an output of 60 W.

Unless otherwise defined herein, "particle size D50" may be an average particle size D50, which refers to a size of a particle with a cumulative volume of 50% by volume in a particle size distribution. The particle size distribution may be obtained from the above method in the particle size D100.

If (when) the particle is spherical, the size may mean a diameter.

In the present specification, "(meth)acryl" refers to acryl and/or methacryl.

Hereinafter, unless otherwise defined, "substitution" means that hydrogen in a compound is substituted with a substituent such as or including at least one of a C1 to C30 alkyl group, a C2 to C30 alkenyl group, a C2 to C30 alkynyl group, a C6 to C30 aryl group, a C7 to C30 alkylaryl group, a C1 to C30 alkoxy group, a C1 to C30 heteroalkyl group, a C3 to C30 heteroalkylaryl group, a C3 to C30 cycloalkyl group, a C3 to C15 cycloalkenyl group, a C6 to C30 cycloalkynyl group, a C2 to C30 heterocycloalkyl group, a halogen (F, Cl, Br, or I), a hydroxy group (-OH), a nitro group (-NO₂), a cyano group (-CN), an amino group (-NRR') (herein, R and R' are each independently hydrogen or a C1 to C6 alkyl group), a sulfobetaine group (-RR'N+(CH₂)ₙSO₃-, n is a natural number from 1 to 10), a carboxybetaine group (-RR'N+(CH₂)ₙCOO-, n is a natural number from 1 to 10) (herein, R and R' are each independently a C1 to C20 alkyl group), an azido group (-N₃), an amidino group (-C(=NH)NH₂), a hydrazino group (-NHNH₂), a hydrazono group (=N(NH₂)), a carbamoyl group (-C(O)NH₂), a thiol group (-SH), an acyl group (-C(=O)R, herein, R denotes hydrogen, a C1 to C6 alkyl group, a C1 to C6 alkoxy group , or a C6 to C12 aryl group), a carboxyl group (-COOH) or a salt thereof (-C(=O)OM, herein, M denotes an organic or inorganic cation), a sulfonic acid group (-SO₃H) or a salt thereof (-SO₃M, herein, M denotes an organic or inorganic cation), a phosphate group (-PO₃H₂) or a salt thereof (-PO₃MH or -PO₃M₂, herein, M denotes an organic or inorganic cation), and a combination thereof.

Hereinafter, the C1 to C3 alkyl group may be or include a methyl group, an ethyl group, or a propyl group. The C1 to C10 alkylene group may be or include, for example, a C1 to C6 alkylene group, a C1 to C5 alkylene group, or a C1 to C3 alkylene group and may be or include, for example, a methylene group, an ethylene group, or a propylene group. The C3 to C20 cycloalkylene group may be or include, for example, a C3 to C10 cycloalkylene group, or a C5 to C10 cycloalkylene group, for example, a cyclohexylene group. The C6 to C20 arylene group may be or include, for example, a C6 to C10 arylene group, for example, a phenylene group. The C3 to C20 heterocyclic group may be or include, for example, a C3 to C10 heterocyclic group, for example, a pyridine group.

Hereinafter, "hetero" means including one or more heteroatoms such as or including at least one of N, O, S, Si, and P.

In addition, in the chemical formulas, the symbol * refers to a part that is connected to the same or different atom, group, or structural unit.

Unless otherwise specifically stated in the chemical formulas described herein, hydrogen may be considered to be bonded in the structure of the chemical formula.

Hereinafter, "alkali metal" refers to an element belonging to Group 1 of the periodic table, such as lithium, sodium, potassium, rubidium, cesium, or francium, and may be present in a cationic or neutral state.

In the present specification, when describing a numerical range, "X to Y" means "X or more and Y or less (X≤ and ≤Y)."

When the terms "about" or "substantially" are used in this specification in connection with a numerical value, it is intended that the associated numerical value include a tolerance of ±10% around the stated numerical value. When ranges are specified, the range includes all values therebetween such as increments of 0.1%.

According to an example embodiment of the present disclosure, the separator for a rechargeable lithium battery includes a porous substrate and a coating layer located on at least one surface of the porous substrate, wherein the coating layer includes a binder, the binder includes a copolymer including a first structural unit including a unit derived from an aromatic-based unsaturated monomer; a second structural unit derived from a (meth)acrylic monomer containing an alkyl group with 4 or more carbon atoms in the main chain of the ester moiety; and a third structural unit derived from a sulfonic acid group-containing monomer. Based on 100 mol% of the copolymer, the first structural unit is included in an amount in a range of from about 5 mol% to about 80 mol%, the second structural unit is included in an amount in a range of from about 10 mol% to about 40 mol%, and the third structural unit is included in an amount in a range of from about 5 mol% to about 80 mol%.

The coating layer may improve the lifespan and safety of a rechargeable lithium battery by significantly lowering the membrane resistance of the separator. The coating layer may improve the safety of a rechargeable lithium battery by providing high adhesion. The coating layer may have high electrolyte wettability and improved flexibility, thereby providing a rechargeable lithium battery with improved resistance. The coating layer may have high capacity retention rates and low direct current internal resistance (DC-IR) change rates at both room temperature (e.g., a range of from about 20 °C to about 30 °C) and high temperature (e.g., a range of from about 40 °C to about 50 °C), thereby increasing the reliability of the rechargeable lithium battery.

According to an example embodiment of the present disclosure, the separator may have an electrolyte wettability of about 130 wt% or more.

According to an example embodiment of the present disclosure, the separator may have an adhesion to a positive electrode of about 0.90 N or more.

According to an example embodiment of the present disclosure, the separator may have a membrane resistance of about 0.65 Ω or less when impregnated with an electrolyte.

According to an example embodiment of the present disclosure, the separator may have a capacity retention rate of about 85% or higher at room temperature, and about 70% or higher at high temperature.

According to an example embodiment of the present disclosure, the separator may have a DC-IR change rate of about 220% or less after 200 cycles at room temperature, and about 330% or less after 200 cycles at high temperature.

The electrolyte wettability, adhesion to a positive electrode, membrane resistance in impregnation with an electrolyte, capacity retention rates at room temperature and high temperature, and DC-IR (direct current-internal resistance) change rates at room temperature and high temperature may be measured by the methods described below.

According to an example embodiment of the present disclosure, the copolymer constitutes an adhesive binder to secure adhesion of the separator to an electrode. There is a trade-off relationship between membrane resistance and adhesion. The copolymer may lower the membrane resistance of the separator while increasing adhesion.

According to an example embodiment of the present disclosure, the copolymer is a particulate binder and may have an average particle size D50 in a range of from about 500 nm to about 700 nm, for example for example 500, 510, 520, 530, 540, 550, 560, 570, 580, 590, 600, 610, 620, 630, 640, 650, 660, 670, 680, 690, or 700 nm. Within this range, adhesion may increase.

When the copolymer has a glass transition temperature, it may be in a range of from about 60 °C to about 80 °C. Within this range, not only is adhesion to an electrode desired or improved, but also ion conductivity may be good or desirable. The glass transition temperature of the copolymer may be measured by conventional methods known to those skilled in the art using, e.g., thermomechanical analysis (TMA). For example, the glass transition temperature can be measured as follows:
1. Cut the copolymer to be analyzed to a size of 0.5 mm x 8 mm to prepare a sample, attach it to the holder, and place it on a sample probe of the TMA equipment.
2. Set the mechanical load to 0.0150 N and the heating rate to 5°C/min, and measure the change in the sample length according to temperature.
3. The temperature at which the slope of the graph obtained from the TMA equipment changes is designated as the glass transition temperature.

The copolymer may be included in an amount in a range of from about 1 wt% to about 100 wt%, from about 1 wt% to about 90 wt%, and for example from about 5 wt% to about 80 wt%, for example, from about 10 wt% to about 80 wt%, based on the total amount of the coating layer. Within this range, adhesion to an electrode may be exhibited, and battery resistance does not increase, and thus there may be no limitation on capacity implementation.

### Coating layer

The coating layer is or includes an adhesive layer. The coating layer includes a binder, and the copolymer of the monomer mixture described below may be included in an amount of about 95 wt% or more, for example, in a range of from about 95 wt% to about 100 wt%, or about 100 wt% in the binder.

For the copolymer, the sum of the content of the first structural unit, the second structural unit, and the third structural unit may be about 95 mol% or more, for example, a range of from about 95 to about 100 mol%, or about 100 mol%. Within this range, it may be easier to achieve the above-described effects of the separator.

### First structural unit:

The first structural unit includes a unit derived from an aromatic-based unsaturated monomer. The aromatic-based unsaturated monomer may include an aromatic vinyl-based monomer. The unit derived from an aromatic-based unsaturated monomer can provide adhesion so that the first coating layer is attached to the porous substrate and an electrode, and improve the air permeability of the separator.

The unit derived from an aromatic-based unsaturated monomer is represented by the following Chemical Formula 1, and the copolymer may include one or more units represented by the following Chemical Formula 1:

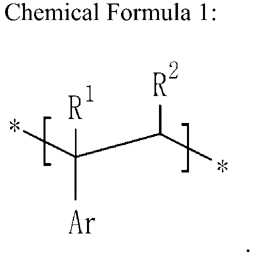

In Chemical Formula 1,
R¹ and R² each independently is or includes hydrogen or a substituted or unsubstituted C1 to C5 alkyl group, and
Ar is or includes a substituted or unsubstituted, monocyclic or polycyclic C6 to C20 aryl group.

In an example, Ar in Chemical Formula 1 is or includes a monocyclic or polycyclic C6 to C20 aryl group and may be or include, for example, a phenyl group, a naphthalenyl group, an anthracenyl group, a pyrenyl group, or the like.

In an example, the unit derived from an aromatic-based unsaturated monomer is represented by the following Chemical Formula 2, and the copolymer may include one or more units represented by the following Chemical Formula 2:

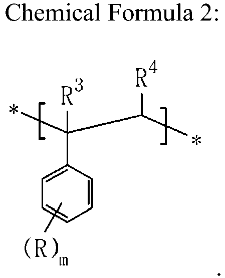

In Chemical Formula 2,
R³ and R⁴ each independently is or includes hydrogen or a substituted or unsubstituted C1 to C5 alkyl group,
R is or includes one or more of a substituted or unsubstituted C1 to C20 alkyl group, a substituted or unsubstituted C3 to C20 cycloalkyl group, a substituted or unsubstituted C1 to C20 alkoxy group, and a substituted or unsubstituted C3 to C20 aryl group, and
m is an integer in a range from 0 to 5.

In an example, R in Chemical Formula 2 may be or include a substituted or unsubstituted C1 to C20 alkyl group or a substituted or unsubstituted C1 to C20 alkoxy group. In an example, m in Chemical Formula 2 may be 0 or 1.

For example, the aromatic-based unsaturated monomer including the aromatic vinyl-based monomer may include one or more of styrene, α-methyl styrene, 4-butyl styrene such as 4-n-butyl styrene, 4-iso-butyl styrene, 4-t-butyl styrene, and the like, butoxy styrene including 4-butoxy styrene such as 4-n-butoxy styrene, 4-iso-butoxy styrene, 4-t-butoxy styrene, and the like, halo styrene such as chloro styrene, bromo styrene, fluoro styrene, and the like, vinyl toluene such as 4-vinyl toluene, 3-vinyl toluene, 2-vinyl toluene, and the like, and vinyl naphthalene such as 1-vinyl naphthalene, 2-vinyl naphthalene, and the like.

In addition to the unit derived from an aromatic-based unsaturated monomer, the first structural unit may further include a unit derived from a (meth)acrylic monomer containing an alkyl group having 1 to 3 carbon atoms in the main chain in the ester moiety. The unit derived from the (meth)acrylic monomer can provide an additional adhesion improvement effect.

The unit derived from the (meth)acrylic monomer is represented by the following Chemical Formula 3, and the copolymer may include one or more units represented by the following Chemical Formula 3:

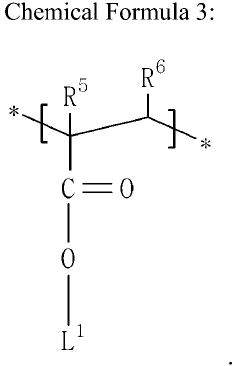

In Chemical Formula 3,
R⁵ and R⁶ each independently is or includes hydrogen or a methyl group, and
L¹ is or includes a substituted or unsubstituted, straight or branched C1 to C3 alkyl group.

In an example, the (meth)acrylic monomer may include one or more of methyl (meth)acrylate, ethyl (meth)acrylate, n-propyl (meth)acrylate, and iso-propyl (meth)acrylate.

For example, a homopolymer of the (meth)acrylic monomer may have a glass transition temperature of about 50 °C or higher, for example, in a range of from about 50 °C to about 150 °C. In the above range, a glass transition temperature of the above-described copolymer can be readily reached. For example, the (meth)acrylic monomer may be methyl methacrylate, ethyl methacrylate, or the like.

The first structural unit is included in an amount in a range of from about 5 mol% to about 80 mol% with respect to 100 mol% of the copolymer. When the first structural unit is included in an amount of about 5 mol% or more, electrolyte wettability can be improved, and a capacity retention rate at high temperature can be high. When the first structural unit is included in an amount of about 80 mol% or less, membrane resistance cannot be increased, and a capacity retention rate at room temperature and high temperature can be high. For example, the first structural unit may be included in an amount in a range of 5, 6, 7, 8, 9, 10, 11, 12, 13, 14, 15, 16, 17, 18, 19, 20, 21, 22, 23, 24, 25, 26, 27, 28, 29, 30, 31, 32, 33, 34, 35, 36, 37, 38, 39, 40, 41, 42, 43, 44, 45, 46, 47, 48, 49, 50, 51, 52, 53, 54, 55, 56, 57, 58, 59, 60, 61, 62, 63, 64, 65, 66, 67, 68, 69, 70, 71, 72, 73, 74, 75, 76, 77, 78, 79, 80 mol%, from about 10 mol% to about 70 mol%, or about 30 mol% to about 60 mol% with respect to 100 mol% of the copolymer. When the first structural unit is included in the above range, the separator can exhibit low membrane resistance, desired or improved adhesion to a porous substrate and an electrode, air permeability, and oxidation resistance.

The unit derived from an aromatic-based unsaturated monomer may be included in an amount in a range of from about 5 mol% to about 80 mol%, for example, 5, 6, 7, 8, 9, 10, 11, 12, 13, 14, 15, 16, 17, 18, 19, 20, 21, 22, 23, 24, 25, 26, 27, 28, 29, 30, 31, 32, 33, 34, 35, 36, 37, 38, 39, 40, 41, 42, 43, 44, 45, 46, 47, 48, 49, 50, 51, 52, 53, 54, 55, 56, 57, 58, 59, 60, 61, 62, 63, 64, 65, 66, 67, 68, 69, 70, 71, 72, 73, 74, 75, 76, 77, 78, 79, 80 mol%, from about 10 mol% to about 70 mol%, about 10 mol% to about 60 mol%, about 10 mol% to about 35 mol%, about 15 mol% to about 30 mol%, or from about 5 mol% to about 35 mol% with respect to 100 mol% of the copolymer. In the above range, the above-described effects of the separator can be readily implemented.

The unit derived from the (meth)acrylic monomer may be included in an amount in a range of from about 5 mol% to about 80 mol%, for example, 5, 6, 7, 8, 9, 10, 11, 12, 13, 14, 15, 16, 17, 18, 19, 20, 21, 22, 23, 24, 25, 26, 27, 28, 29, 30, 31, 32, 33, 34, 35, 36, 37, 38, 39, 40, 41, 42, 43, 44, 45, 46, 47, 48, 49, 50, 51, 52, 53, 54, 55, 56, 57, 58, 59, 60, 61, 62, 63, 64, 65, 66, 67, 68, 69, 70, 71, 72, 73, 74, 75, 76, 77, 78, 79, 80 mol%, about 10 mol% to about 70 mol%, about 10 mol% to about 60 mol%, about 10 mol% to about 35 mol%, about 15 mol% to about 30 mol%, or from about 5 mol% to about 35 mol% with respect to 100 mol% of the copolymer. In the above range, the above-described effects of the separator can be readily implemented.

According to an example embodiment, the unit derived from an aromatic-based unsaturated monomer and the unit derived from the (meth)acrylic monomer may be included in a molar ratio in a range of from about 1:0.5 to about 1:2, for example, 1:0.5, 1:0.6, 1:0.7, 1:0.8, 1:0.9, 1:1, 1:1.1, 1:1.2, 1:1.3, 1:1.4, 1:1.5, 1:1.6, 1:1.7, 1:1.8, 1:1.9, 1:2, about 1:1 to about 1:2, or about 1:1 with respect to 100 mol% of the copolymer. In the above range, the above-described effects of the separator can be readily implemented.

### Second structural unit:

The second structural unit is derived from a (meth)acrylic monomer containing an alkyl group having 4 or more carbon atoms in the main chain in the ester moiety. The second structural unit can improve the dispersibility of a coating layer slurry, and also improve the electrolyte wettability and flexibility of the coating layer.

The unit derived from the (meth)acrylic monomer is represented by the following Chemical Formula 4, and the copolymer may include one or more structural units represented by the following Chemical Formula 4:

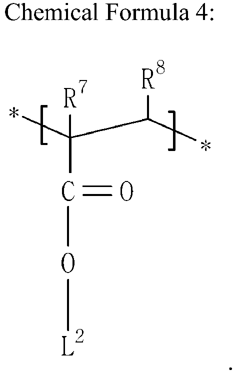

In Chemical Formula 4,
R⁷ and R⁸ each independently is or includes hydrogen or a methyl group, and
L² is or includes a substituted or unsubstituted, straight or branched C4 to C30 alkyl group).

In this case, the alkyl group may be or include a C4 to C20 alkyl group, a C4 to C10 alkyl group, or a C4 to C8 alkyl group.

According to an example embodiment, the (meth)acrylic monomer may include one or more of 2-ethylhexyl (meth)acrylate, n-butyl (meth)acrylate, iso-butyl (meth)acrylate, tert-butyl (meth)acrylate, pentyl (meth)acrylate, hexyl (meth)acrylate, heptyl (meth)acrylate, n-octyl (meth)acrylate, nonyl (meth)acrylate, isononyl (meth)acrylate, decyl (meth)acrylate, and isodecyl (meth)acrylate.

The second structural unit is included in an amount in a range of from about 10 mol% to about 40 mol% with respect to 100 mol% of the copolymer. When the second structural unit is included in an amount of about 10 mol% or more, membrane resistance can decrease upon impregnation with an electrolyte, and a capacity retention rate at room temperature and high temperature can be high. When the second structural unit is included in an amount of about 40 mol% or less, air permeability can be improved, and a capacity retention rate at room temperature and high temperature can be high.

For example, the second structural unit may be included in an amount in a range of 10, 11, 12, 13, 14, 15, 16, 17, 18, 19, 20, 21, 22, 23, 24, 25, 26, 27, 28, 29, 30, 31, 32, 33, 34, 35, 36, 37, 38, 39, 40 mol%, from about 15 mol% to about 35 mol%, for example, about 20 mol% to about 30 mol% with respect to 100 mol% of the copolymer. In the above range, it can be easy to increase the adhesion to a porous substrate and an electrode and flexibility of the coating layer.

### Third structural unit:

The third structural unit is derived from a sulfonic acid group-containing monomer. The unit derived from a sulfonic acid group-containing monomer can decrease the membrane resistance of the separator by increasing the possibility of lithium ion movement in the presence of the first structural unit and the second structural unit.

According to an example embodiment, the third structural unit increases the glass transition temperature of the copolymer by including a bulky functional group derived from (meth)acrylamido sulfonic acid or a salt thereof, and thus structural safety is provided. Also, when the third structural unit is a functional group derived from a salt of (meth)acrylamido sulfonic acid, a metal (M) may move through the third structural unit by a sulfonic acid functional group substituted with the metal, and thus the membrane resistance of the separator can significantly decrease.

The third structural unit may be represented by the following Chemical Formula 5, 6, or 7. The copolymer may include one or more third structural units represented by the following Chemical Formulas 5, 6, and 7:

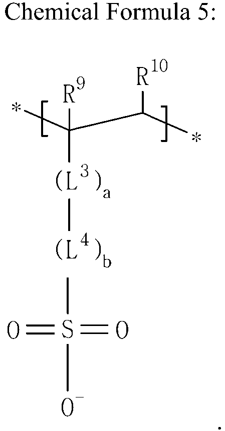

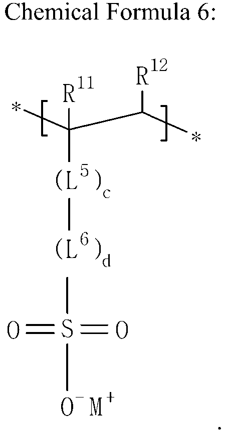

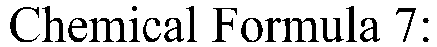

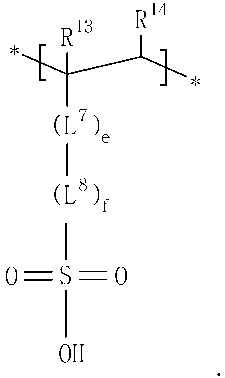

In Chemical Formulas 5 to 7,
R⁹, R¹⁰, R¹¹, R¹², R¹³, and R¹⁴ each independently is or includes hydrogen or a C1 to C3 alkyl group,
L³, L⁵, and L⁷ each independently is or includes -C(=O)-, -C(=O)O-, - OC(=O)-, -O-, or -C(=O)NH-,
L⁴, L⁶, and L⁸ each independently is or includes a substituted or unsubstituted C1 to C10 alkylene group, a substituted or unsubstituted C3 to C20 cycloalkylene group, a substituted or unsubstituted C6 to C20 arylene group, or a substituted or unsubstituted C3 to C20 heterocyclic group, and
a, b, c, d, e, and f are each independently an integer in a range from 0 to 2, and
in Chemical Formula 6,
M is or includes an alkali metal.

In an example, in Chemical Formulas 5 to 7,
L³, L⁵, and L⁷ may each independently be or include -C(=O)NH-,
L⁴, L⁶, and L⁸ may each independently be or include a C1 to C10 alkylene group, and
a, b, c, d, e, and f may be equal to 1.

The sulfonic acid group-containing structural unit may include only one of the structural units represented by Chemical Formulas 5 to 7, or two or more thereof. In an example, the sulfonic acid group-containing structural unit may include the structural unit represented by Chemical Formula 6, and in another example, the sulfonic acid group-containing structural unit may include the structural unit represented by Chemical Formula 6 and the structural unit represented by Chemical Formula 7.

The sulfonic acid group-containing structural unit may be or include, for example, a structural unit derived from vinyl sulfonic acid, allyl sulfonic acid, styrene sulfonic acid, anethol sulfonic acid, (meth)acrylamido alkane sulfonic acid, sulfoalkyl (meth)acrylate, or a salt thereof.

Herein, the alkane may be or include a C1 to C20 alkane, a C1 to alkane, or a C1 to C6 alkane, and the alkyl may be or include a C1 to C20 alkyl, a C1 to alkyl, or a C1 to C6 alkyl. The salt refers to a salt constituted by the above-described sulfonic acid and appropriate ions. The ion may be or include, for example, an alkali metal ion, and in this case, the salt may be or include a sulfonic acid alkali metal salt.

The (meth)acrylamido alkane sulfonic acid may be or include, for example, 2-(meth)acrylamido-2-methylpropane sulfonic acid, and the sulfoalkyl (meth)acrylate may be or include, for example, 2-sulfoethyl (meth)acrylate, 3-sulfopropyl (meth)acrylate, or the like.

The third structural unit is included in an amount in a range of from about 5 mol% to about 80 mol% with respect to 100 mol% of the copolymer. When the third structural unit is included in an amount of about 5 mol% or more, the membrane resistance of the separator can decrease, and the DC-IR change rate at room temperature and high temperature can decrease. When the third structural unit is included in an amount of about 80 mol% or less, the capacity retention rate of a battery at room temperature and high temperature can increase, and the DC-IR change rate at room temperature and high temperature can decrease.

For example, the third structural unit may be included in an amount in a range of 5, 6, 7, 8, 9, 10, 11, 12, 13, 14, 15, 16, 17, 18, 19, 20, 21, 22, 23, 24, 25, 26, 27, 28, 29, 30, 31, 32, 33, 34, 35, 36, 37, 38, 39, 40, 41, 42, 43, 44, 45, 46, 47, 48, 49, 50, 51, 52, 53, 54, 55, 56, 57, 58, 59, 60, 61, 62, 63, 64, 65, 66, 67, 68, 69, 70, 71, 72, 73, 74, 75, 76, 77, 78, 79, 80 mol%, from about 10 mol% to about 60 mol% with respect to 100 mol% of the copolymer. For example, the third structural unit may be included in an amount in a range of from about 20 mol% to about 60 mol%, or from about 30 mol% to about 60 mol% with respect to 100 mol% of the copolymer. When the third structural unit is included in the above range, the membrane resistance of the binder and the separator including the same can significantly decrease, the capacity retention rate of a battery at room temperature and high temperature can increase, and the DC-IR change rate at room temperature and high temperature can decrease.

The binder may include an alkali metal. The alkali metal may be present in the form of a cation, and may be or include, for example, at least one of lithium, sodium, potassium, rubidium, or cesium. For example, the alkali metal may be present in the form of a salt by being combined with the copolymer. The alkali metal can help the synthesis of the monomer mixture into the copolymer in an aqueous solvent, and improve the adhesion of the coating layer, the air permeability of the separator, oxidation resistance, and the like.

The copolymer may have a glass transition temperature in a range of from about 60 °C to about 80 °C. In an example, the glass transition temperature may be in a range of 60, 61, 62, 63, 64, 65, 66, 67, 68, 69, 70, 71, 72, 73, 74, 75, 76, 77, 78, 79, 80°C, from about 62 °C to about 78 °C, for example, about 64 °C to about 75 °C. In the above range, the coating layer can have desired or improved adhesion, and a separator including the same can exhibit desired or improved air permeability and oxidation resistance. The glass transition temperature of the copolymer may be measured by a typical method known to those skilled in the art, such as, e.g., thermomechanical analysis (TMA). For example, the glass transition temperature can be measured as follow:
1. Cut the copolymer to be analyzed to a size of 0.5 mm x 8 mm to prepare a sample, attach it to the holder, and place it on a sample probe of the TMA equipment.
2. Set the mechanical load to 0.0150 N and the heating rate to 5°C/min, and measure the change in the sample length according to temperature.
3. The temperature at which the slope of the graph obtained from the TMA equipment changes is designated as the glass transition temperature.

The alkali metal may be included in an amount in a range of from about 1 wt% to about 40 wt%, for example, 1, 2, 3, 4, 5, 6, 7, 8, 9, 10, 11, 12, 13, 14, 15, 16, 17, 18, 19, 20, 21, 22, 23, 24, 25, 26, 27, 28, 29, 30, 31, 32, 33, 34, 35, 36, 37, 38, 39, 40 wt%, about 1 wt% to about 30 wt%, about 1 wt% to about 20 wt%, or from about 10 wt% to about 20 wt% in the binder including the alkali metal and the copolymer. For example, the copolymer and the alkali metal may be included in a weight ratio in a range of from about 99:1 to about 60:40, or from about 99:1 to about 70:30, for example, a weight ratio in a range of from about 99:1 to about 80:20, or from about 90:10 to about 80:20.

The alkali metal may be included in an amount in a range of from about 0.1 mol% to about 1.0 mol% with respect to the total amount of the alkali metal and the copolymer of the monomer mixture. When the alkali metal is included in the above range, the coating layer can have desired or improved adhesion, and a separator including the same can exhibit desired or improved air permeability and oxidation resistance.

The binder including the copolymer of the monomer mixture may be in various forms such as an alternating polymer in which the structural units are alternately distributed, a random polymer in which the structural units are randomly distributed, and a graft polymer in which some structural units are grafted, and the like.

The binder including the copolymer of the monomer mixture may have a weight average molecular weight in a range of from about 100,000 g/mol to about 1,000,000 g/mol, about 100,000 g/mol to about 500,000 g/mol, about 100,000 g/mol to about 150,000 g/mol, about 200,000 g/mol to about 130,000 g/mol, or from about 300,000 g/mol to about 900,000 g/mol. When the weight average molecular weight of the binder including the copolymer of the monomer mixture satisfies the above range, desired or improved adhesion and low resistance can be exhibited. The weight average molecular weight may be or include a polystyrene-converted average molecular weight measured using, e.g., gel permeation chromatography.

The binder including the copolymer of the monomer mixture may be prepared by solution polymerization.

According to an example embodiment, the binder including the copolymer of the monomer mixture may be included in the form of a film in the coating layer of the separator.

The coating layer may have a thickness in a range of from about 0.01 µm to about 20 µm. In the above range, the thickness may be from about 0.01 µm to about 5 µm, about 0.1 µm to about 3 µm, or from about 0.1 µm to about 1.5 µm. In the above range, the first coating layer can be used in the separator.

A ratio of the thickness of the coating layer to the thickness of the porous substrate may be in a range of from about 0.1 to about 0.8, for example, about 0.1 to about 0.7 or from about 0.15 to about 0.6. In the above range, the separator can exhibit desired or improved air permeability, heat resistance, and adhesion.

### Porous substrate

The porous substrate may be or include a substrate that has many pores and is typically used in electrochemical devices. The porous substrate may be or include, but is not limited, a polymer membrane formed of any one polymer such as or including at least one of a polyolefin such as polyethylene, polypropylene, or the like, a polyester such as polyethylene terephthalate, polybutylene terephthalate, polyethylene naphthalate, or the like, polyacetal, polyamide, polyimide, polycarbonate, polyetheretherketone, polyaryletherketone, polyetherimide, polyamideimide, polybenzimidazole, polyethersulfone, polyphenylene oxide, a cyclic olefin copolymer, polyphenylene sulfide, glass fiber, Teflon, and polytetrafluoroethylene, or a copolymer or mixture of two or more thereof.

The porous substrate may be or include, for example, a polyolefin-based substrate including a polyolefin, and the polyolefin-based substrate can contribute to improving the safety of a battery due to the desired or improved shutdown function thereof. The polyolefin-based substrate may be or include at least one of, for example, from a polyethylene single-layer film, a polypropylene single-layer film, a polyethylene/polypropylene double-layer film, a polypropylene/polyethylene/polypropylene triple-layer film, and a polyethylene/polypropylene/polyethylene triple-layer film. Also, the polyolefin-based resin may include a non-olefin resin in addition to an olefin resin, or include a copolymer of olefin and non-olefin monomers.

The porous substrate may have a thickness in a range of from about 1 µm to about 40 µm, for example, about 1 µm to about 30 µm, about 1 µm to about 20 µm, or from about 5 µm to about 15 µm.

According to one example embodiment, a separator for a lithium secondary battery may exhibit desired or improved air permeability, and may have an air permeability value of, for example, less than about 250 sec/100cc, for example, about 230 sec/100cc or less, or about 200 sec/100cc or less. That is, the separator may have an air permeability value of about 40 sec/100cc per unit thickness, for example, about 30 sec/100cc·1µm or less, or about 25 sec/100cc·1µm or less. Herein, the air permeability refers to the time (seconds) it takes for 100cc of air to permeate the unit thickness of the separator. The air permeability per unit thickness can be obtained by measuring the air permeability for the entire thickness of the separator, and then dividing the air permeability by the thickness. Air permeability can be measured using an air permeability measuring device (Asahi Seiko, EG01-55-1MR) as the time (in seconds) it takes for 100 cc of air to permeate.

A secondary battery separator according to one example embodiment can be manufactured by applying a composition for forming a coating layer to one side, or both sides, of a porous substrate and then drying the composition.

A method for manufacturing a lithium secondary battery separator includes coating a separator coating composition including the binder on at least one side of a porous substrate, and drying the porous substrate coated with the separator coating composition to form a coating layer.

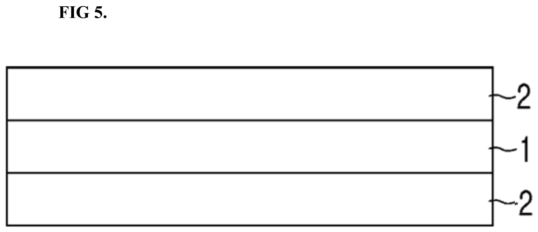

FIG. 5 is a cross-sectional view showing a separator for a rechargeable lithium battery according to one example embodiment. Referring to FIG. 5, the separator for a rechargeable lithium battery includes a porous substrate 1 and a coating layer 2 located on both surfaces of the porous substrate 1. The coating layer 2 may include the binder (not shown).

### Rechargeable lithium battery

According to one example embodiment, the rechargeable lithium battery includes the separator for a rechargeable lithium battery, a positive electrode, and a negative electrode.

The separator for rechargeable lithium battery refers to the description described above. The separator for rechargeable lithium battery may be positioned between the positive electrode and the negative electrode.

### Positive electrode

A positive electrode for a rechargeable lithium battery may include a current collector, and a positive electrode active material layer on the current collector. The positive electrode active material layer may include a positive electrode active material, and may further include a binder and/or a conductive material.

For example, the positive electrode may further include an additive that can constitute a sacrificial positive electrode.

### Positive electrode active material

The positive electrode active material may include a compound (lithiated intercalation compound) that is capable of intercalating and deintercalating lithium. For example, at least one of a composite oxide of lithium and a metal such as or including at least one of cobalt, manganese, nickel, and combinations thereof, may be used.

The composite oxide may be or include a lithium transition metal composite oxide. Examples of the composite oxide may include at least one of lithium nickel-based oxide, lithium cobalt-based oxide, lithium manganese-based oxide, lithium iron phosphate-based compound, cobalt-free nickel-manganese-based oxide, or a combination thereof.

As an example, the following compounds represented by any one of the following Chemical Formulas may be used. LiₐA_{1-b}X_{b}O_{2-c}D_{c} (0.90≤a≤1.8, 0≤b≤0.5, and 0≤c≤0.05); LiₐMn_{2-b}X_{b}O_{4-c}D_{c} (0.90≤a≤1.8, 0≤b≤0.5, and 0≤c≤0.05); LiₐNi_{1-b-c}Co_{b}X_{c}O_{2-α}D_{α} (0.90≤a≤1.8, 0≤b≤0.5, 0≤c≤0.5, and 0<α<2); LiₐNi_{1-b-c}Mn_{b}X_{c}O_{2-α}D_{α} (0.90≤a≤1.8, 0≤b≤0.5, 0≤c≤0.5, and 0<α<2); LiₐNi_{b}Co_{c}L¹_{d}GₑO₂ (0.90≤a≤1.8, 0≤b≤0.9, 0≤c≤0.5, 0≤d≤0.5, and 0≤e≤0.1); LiₐNiG_{b}O₂ (0.90≤a≤1.8 and 0.001≤b≤0.1); LiₐCoG_{b}O₂ (0.90≤a≤1.8 and 0.001≤b≤0.1); LiₐMn_{1-b}G_{b}O₂ (0.90≤a≤1.8 and 0.001≤b≤0.1); LiₐMn₂G_{b}O₄ (0.90≤a≤1.8 and 0.001≤b≤0.1); LiₐMn_{1-g}G_{g}PO₄ (0.90≤a≤1.8 and 0≤g≤0.5); Li_{(3-f)}Fe₂(PO₄)₃ (0≤f≤2); or LiₐFePO₄ (0.90≤a≤1.8).

In the above Chemical Formulas, A is or includes at least one of Ni, Co, Mn, or a combination thereof; X is or includes at least one of Al, Ni, Co, Mn, Cr, Fe, Mg, Sr, V, a rare earth element or a combination thereof; D is or includes at least one of O, F, S, P, or a combination thereof; G is or includes at least one of Al, Cr, Mn, Fe, Mg, La, Ce, Sr, V, or a combination thereof; and L¹ is or includes at least one of Mn, Al, or a combination thereof.

The positive electrode active material may be or include, for example, a high nickel-based positive electrode active material having a nickel content that is greater than or equal to about 80 mol%, greater than or equal to about 85 mol%, greater than or equal to about 90 mol%, greater than or equal to about 91 mol%, or greater than or equal to about 94 mol% and less than or equal to about 99 mol% based on 100 mol% of the metal excluding lithium in the lithium transition metal composite oxide. The high-nickel-based positive electrode active material may be capable of achieving high capacity and can be applied to a high-capacity, high-density rechargeable lithium battery.

An amount of the positive electrode active material may be in a range of from about 90 wt% to about 99.5 wt% based on 100 wt% of the positive electrode active material layer. Amounts of the binder and the conductive material may be in a range of from about 0.5 wt% to about 5 wt%, respectively, based on 100 wt% of the positive electrode active material layer.

The binder attaches the positive electrode active material particles to each other, and attaches the positive electrode active material to the current collector. Examples of the binder may include at least one of polyvinyl alcohol, carboxymethyl cellulose, hydroxypropyl cellulose, diacetyl cellulose, polyvinylchloride, carboxylated polyvinylchloride, polyvinylfluoride, a polymer including ethylene oxide, polyvinylpyrrolidone, polyurethane, polytetrafluoroethylene, polyvinylidene fluoride, polyethylene, polypropylene, a styrene-butadiene rubber, a (meth)acrylated styrene-butadiene rubber, an epoxy resin, a (meth)acrylic resin, a polyester resin, nylon, and the like, as non-limiting examples.

The conductive material may impart conductivity (e.g., electrical conductivity) to the electrode. Any material that does not cause chemical change (e.g., that does not cause an undesirable chemical change in the rechargeable lithium battery), and that conducts electrons, can be used in the battery. Examples of the conductive material may include a carbon-based material such as at least one of natural graphite, artificial graphite, carbon black, acetylene black, ketjen black, a carbon fiber, a carbon nanofiber, and carbon nanotube; a metal-based material containing at least one of copper, nickel, aluminum, silver, and the like, in a form of a metal powder or a metal fiber; a conductive polymer such as a polyphenylene derivative; or a mixture thereof.

Al may be used as the current collector, but the current collector is not limited thereto.

### Negative electrode

The negative electrode for a rechargeable lithium battery may include a current collector, and a negative electrode active material layer on the current collector. The negative electrode active material layer may include a negative electrode active material, and may further include a binder and/or a conductive material (e.g., an electrically conductive material).

For example, the negative electrode active material layer may include from about 90 wt% to about 99 wt% of the negative electrode active material, about 0.5 wt% to about 5 wt% of the binder, and about 0 wt% to about 5 wt% of the conductive material.

### Negative Electrode Active Material

The negative electrode active material may include at least one of a material that reversibly intercalates/deintercalates lithium ions, a lithium metal, a lithium metal alloy, a material capable of doping/dedoping lithium, or a transition metal oxide.

The material that reversibly intercalates/deintercalates lithium ions may include a carbon-based negative electrode active material, such as, for example, crystalline carbon, amorphous carbon or a combination thereof. The crystalline carbon may be or include graphite such as non-shaped, sheet-shaped, flake-shaped, sphere-shaped, or fiber-shaped, natural graphite or artificial graphite. The amorphous carbon may be or include at least one of a soft carbon, a hard carbon, a mesophase pitch carbonization product, calcined coke, and the like.

The lithium metal alloy includes an alloy of lithium and a metal such as or including at least one of Na, K, Rb, Cs, Fr, Be, Mg, Ca, Sr, Si, Sb, Pb, In, Zn, Ba, Ra, Ge, Al, and Sn.

The material capable of doping/dedoping lithium may be or include a Si-based negative electrode active material or a Sn-based negative electrode active material. The Si-based negative electrode active material may include at least one of silicon, a silicon-carbon composite, SiOx (0 < x < 2), a Si-Q alloy (where Q is or includes at least one of an alkali metal, an alkaline-earth metal, a Group 13 element, a Group 14 element (excluding Si), a Group 15 element, a Group 16 element, a transition metal, a rare earth element, and a combination thereof). The Sn-based negative electrode active material may include at least one of Sn, SnO₂, a Sn-based alloy, or a combination thereof.

The silicon-carbon composite may be or include a composite of silicon and amorphous carbon. According to an example embodiment, the silicon-carbon composite may be in the form of silicon particles and amorphous carbon coated on the surface of the silicon particles. For example, the silicon-carbon composite may include a secondary particle (core) in which primary silicon particles are assembled, and an amorphous carbon coating layer (shell) on the surface of the secondary particle. The amorphous carbon may also be between the primary silicon particles, and, for example, the primary silicon particles may be coated with the amorphous carbon. The secondary particle may be dispersed in an amorphous carbon matrix.

The silicon-carbon composite may further include crystalline carbon. For example, the silicon-carbon composite may include a core including crystalline carbon and silicon particles, and an amorphous carbon coating layer on a surface of the core.

The Si-based negative electrode active material or the Sn-based negative electrode active material may be used in combination with a carbon-based negative electrode active material.

The binder may attach the negative electrode active material particles to each other, and may also attach the negative electrode active material to the current collector. The binder may include at least one of a non-aqueous binder, an aqueous binder, a dry binder, or a combination thereof.

The non-aqueous binder may include at least one of polyvinyl chloride, carboxylated polyvinyl chloride, polyvinyl fluoride, an ethylene propylene copolymer, polystyrene, polyurethane, polytetrafluoroethylene, polyvinylidene fluoride, polyethylene, polypropylene, poly amideimide, polyimide, or a combination thereof.

The aqueous binder may be or include at least one of a styrene-butadiene rubber, a (meth)acrylated styrene-butadiene rubber, a (meth)acrylonitrile-butadiene rubber, (meth)acrylic rubber, a butyl rubber, a fluoro rubber, polyethylene oxide, polyvinylpyrrolidone, polyepichlorohydrine, polyphosphazene, poly(meth)acrylonitrile, an ethylene propylene diene copolymer, polyvinylpyridine, chlorosulfonated polyethylene, latex, a polyester resin, a (meth)acrylic resin, a phenol resin, an epoxy resins, polyvinyl alcohol, and a combination thereof.

When an aqueous binder is used as the negative electrode binder, a cellulose-based compound capable of imparting viscosity may be further included. The cellulose-based compound may include at least one of carboxymethyl cellulose, hydroxypropylmethyl cellulose, methyl cellulose, or an alkali metal salt thereof. The alkali metal may include at least one of Na, K, or Li.

The dry binder may be or include a polymer material that is capable of being fibrous. For example, the dry binder may be or include at least one of polytetrafluoroethylene, polyvinylidene fluoride, a polyvinylidene fluoride-hexafluoropropylene copolymer, polyethylene oxide, or a combination thereof.

The conductive material may impart conductivity (e.g., electrical conductivity) to the electrode. Any material that does not cause chemical change (e.g., that does not cause an undesirable chemical change in the rechargeable lithium battery), and that conducts electrons, can be used in the battery. Non-limiting examples thereof may include a carbon-based material such as at least one of natural graphite, artificial graphite, carbon black, acetylene black, ketjen black, a carbon fiber, a carbon nanofiber, and a carbon nanotube; a metal-based material including at least one of copper, nickel, aluminum, silver, and the like, in the form of a metal powder or a metal fiber; a conductive polymer such as a polyphenylene derivative; or a mixture thereof.

The negative current collector may include at least one of a copper foil, a nickel foil, a stainless steel foil, a titanium foil, a nickel foam, a copper foam, a polymer substrate coated with a conductive metal, or a combination thereof.

The rechargeable lithium battery may further include an electrolyte solution.

### Electrolyte Solution

The electrolyte solution for a rechargeable lithium battery may include a non-aqueous organic solvent and a lithium salt.

The non-aqueous organic solvent may constitute a medium for transmitting ions taking part in the electrochemical reaction of a battery.

The non-aqueous organic solvent may be or include at least one of a carbonate-based, ester-based, ether-based, ketone-based, or alcohol-based solvent, an aprotic solvent, or a combination thereof.

The carbonate-based solvent may include at least one of dimethyl carbonate (DMC), diethyl carbonate (DEC), dipropyl carbonate (DPC), methylpropyl carbonate (MPC), ethylpropyl carbonate (EPC), methylethyl carbonate (MEC), ethylene carbonate (EC), propylene carbonate (PC), butylene carbonate (BC), and the like.

The ester-based solvent may include at least one of methyl acetate, ethyl acetate, n-propyl acetate, dimethyl acetate, methyl propionate, ethyl propionate, decanolide, mevalonolactone, valerolactone, caprolactone, and the like.

The ether-based solvent may include at least one of dibutyl ether, tetraglyme, diglyme, dimethoxyethane, 2-methyltetrahydrofuran, 2,5-dimethyltetrahydrofuran, tetrahydrofuran, and the like. In addition, the ketone-based solvent may include cyclohexanone, and the like. The alcohol-based solvent may include ethanol, isopropyl alcohol, and the like. The aprotic solvent may include at least one of nitriles such as R-CN (wherein R is a C2 to C20 linear, branched, or cyclic hydrocarbon group, a double bond, an aromatic ring, or an ether bond, and the like); amides such as dimethylformamide; dioxolanes such as 1,3-dioxolane, 1,4-dioxolane, and the like; sulfolanes, and the like.

The non-aqueous organic solvents may be used alone, or in combination of two or more solvents.

In addition, when using a carbonate-based solvent, a cyclic carbonate and a chain carbonate may be mixed together, and the cyclic carbonate and the chain carbonate may be mixed in a volume ratio in a range of about 1:1 to about 1:9.

The lithium salt dissolved in the organic solvent supplies lithium ions in a battery, enables an operation of a rechargeable lithium battery, and improves transportation of the lithium ions between positive and negative electrodes. Examples of the lithium salt include at least one of LiPF₆, LiBF₄, LiSbF₆, LiAsF₆, LiClO₄, LiAlO₂, LiAlCl₄, LiPO₂F₂, LiCl, LiI, LiN(SO₃C₂F₅)₂, Li(FSO₂)₂N (lithium bis(fluorosulfonyl)imide, LiFSI), LiC₄F₉SO₃, LiN(CₓF₂ₓ₊₁SO₂)(C_{y}F_{2y+1}SO₂) (wherein x and y are integers in a range of 1 to 20), lithium trifluoromethane sulfonate, lithium tetrafluoroethanesulfonate, lithium difluorobis(oxalato)phosphate (LiDFOB), and lithium bis(oxalato) borate (LiBOB).

The rechargeable lithium battery may be classified into cylindrical, prismatic, pouch, or coin-type batteries, and the like depending on their shape.

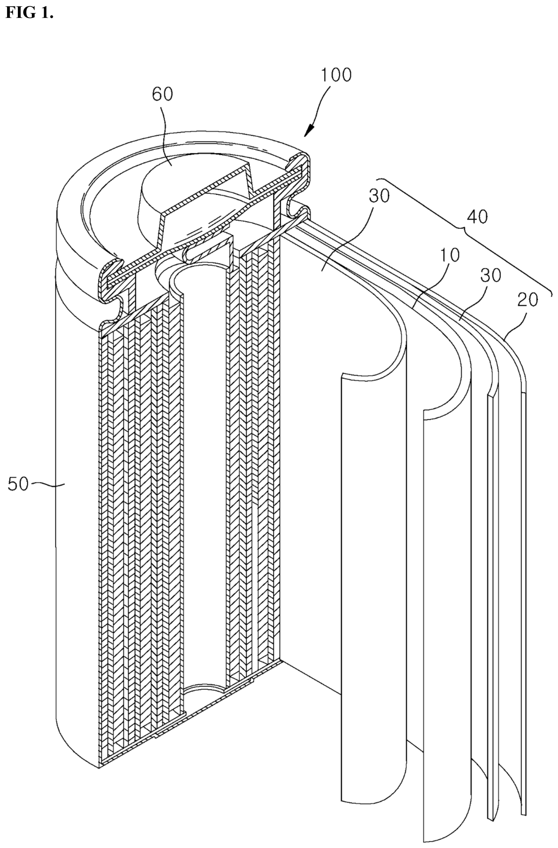

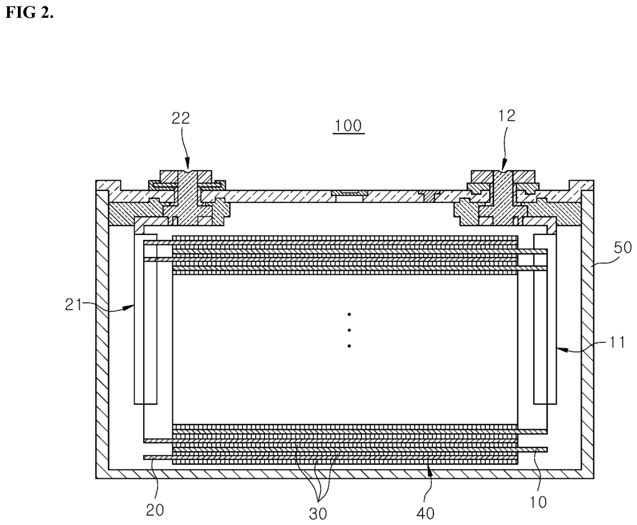

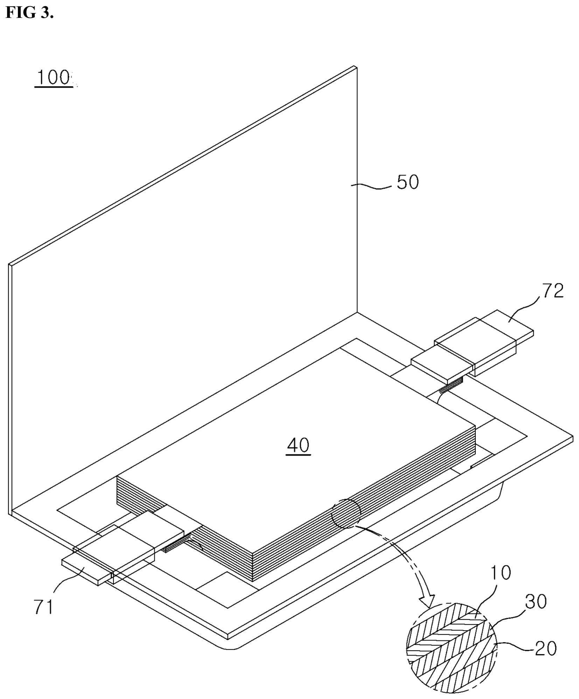

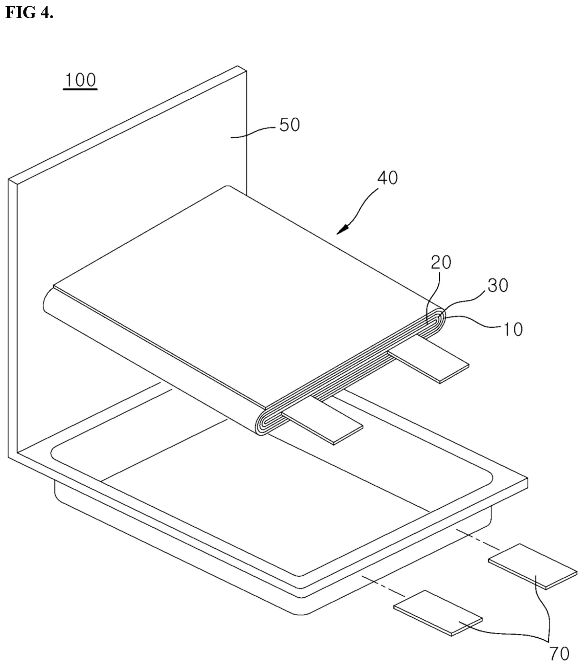

FIG. 1 to FIG. 4 are schematic views illustrating a rechargeable lithium battery according to an example embodiment. FIG. 1 shows a cylindrical battery, FIG. 2 shows a prismatic battery, and FIGS. 3 and 4 show pouch-type batteries. Referring to FIG. 1 to FIG. 4, the rechargeable lithium battery 100 may include an electrode assembly 40 including a separator 30 between a positive electrode 10 and a negative electrode 20, and a case 50 in which the electrode assembly 40 is included. The positive electrode 10, the negative electrode 20, and the separator 30 may be impregnated with an electrolyte solution (not shown). The rechargeable lithium battery 100 may include a sealing member 60 sealing the case 50, as shown in FIG. 1. In FIG. 2, the rechargeable lithium battery 100 may include a positive lead tab 11, a positive terminal 12 connected to the positive lead tab 11, a negative lead tab 21, and a negative terminal 22 connected to the negative lead tab 21. As shown in FIG. 3 and FIG. 4, the rechargeable lithium battery 100 may include an electrode tab 70 illustrated in FIG. 4, or for example, a positive electrode tab 71 and a negative electrode tab 72 illustrated in FIG. 3, the electrode tabs 70/71/72 forming an electric path for inducing the current formed in the electrode assembly 40 to the outside of the battery 100.

The rechargeable lithium battery according to an example embodiment may be applicable to, e.g., automobiles, mobile phones, and/or various types of electric devices, as non-limiting examples.

Hereinafter, examples and comparative examples of the present disclosure are described below. The following examples are given for the purpose of illustration only and are not intended to limit the scope of the present disclosure.

### Preparation Example 1

Into a 3L 4-neck separable flask equipped with a stirrer, a thermometer, and a condenser, distilled water (1249.72 g), a 20% aqueous lithium hydroxide solution (203.69 g), styrene (SM, 36.45 g, 0.35 mol), methyl methacrylate (MMA, 35.04 g, 0.35 mol), 2-ethylhexyl acrylate (EHA, 36.83 g, 0.20 mol), and 2-acrylamido-2-methylpropane sulfonic acid (AMPS, 20.73 g, 0.10 mol) were input, sodium dodecylbenzenesulfonate (16.02 g, 0.05 mol) was added, and then a process of reducing a pressure inside the flask to 10 mmHg using a diaphragm pump and returning the internal pressure with nitrogen to atmospheric pressure was repeated three times.

A reaction was performed for 12 hours while controlling heating so that the temperature of a reaction solution was stably maintained at 65 °C to 70 °C.

After cooling to room temperature, about 10 mL of the reaction solution was taken, and a non-volatile (NV) component was measured. As a result, a particulate copolymer having an NV component content of 9.8 wt% (theoretical value: 10 wt%) was obtained. In the case of the obtained copolymer, poly(SM-co-MMA-co-EHA-co-AMPS) lithium salt, a molar ratio of a first structural unit derived from SM and MMA, a second structural unit derived from EHA, and a third structural unit derived from AMPS was 70:20:10, the particle size was 500 nm, and the glass transition temperature (Tg) of the copolymer was 65.1 °C.

### Preparation Example 2

A copolymer was prepared in the same manner as in Preparation Example 1, with a difference that SM (30.20 g, 0.29 mol), MMA (29.04 g, 0.29 mol), EHA (40.52 g, 0.22 mol), and AMPS (41.45 g, 0.20 mol) were used, and the glass transition temperature of the copolymer was 65.0 °C. A molar ratio of the SM-co-MMA-co-EHA-co-AMPS lithium salt was 29:29:22:20. The NV component content in the reaction solution was 9.0 wt% (theoretical value: 10 wt%).

### Preparation Example 3

An acrylic copolymer was prepared in the same manner as in Preparation Example 1, with a difference that SM (23.95 g, 0.23 mol), MMA (23.03 g, 0.23 mol), EHA (44.20 g, 0.24 mol), and AMPS (62.18 g, 0.30 mol) were used, and the glass transition temperature of the copolymer was 64.0 °C. A molar ratio of the SM-co-MMA-co-EHA-co-AMPS lithium salt was 23:23:24:30. The NV component content in the reaction solution was 9.0 wt% (theoretical value: 10 wt%).

### Preparation Example 4

An acrylic copolymer was prepared in the same manner as in Preparation Example 1, with a difference that SM (17.71 g, 0.17 mol), MMA (35.04 g, 0.17 mol), EHA (47.88 g, 0.26 mol), and AMPS (82.9 g, 0.40 mol) were used, and the glass transition temperature (Tg) of the copolymer was 64.8 °C. A molar ratio of the SM-co-MMA-co-EHA-co-AMPS lithium salt was 17:17:26:40. The NV component content in the reaction solution was 9.0 wt% (theoretical value: 10 wt%).

### Preparation Example 5

An acrylic copolymer was prepared in the same manner as in Preparation Example 1, with a difference that SM (11.46 g, 0.11 mol), MMA (11.01 g, 0.11 mol), EHA (51.56 g, 0.28 mol), and AMPS (103.63 g, 0.50 mol) were used, and the glass transition temperature (Tg) of the copolymer was 64.7 °C. A molar ratio of the SM-co-MMA-co-EHA-co-AMPS lithium salt was 11:11:28:50. The NV component content in the reaction solution was 9.0 wt% (theoretical value: 10 wt%).

### Preparation Example 6

An acrylic copolymer was prepared in the same manner as in Preparation Example 1, with a difference that SM (5.21 g, 0.05 mol), MMA (5.01 g, 0.05 mol), EHA (55.25 g, 0.30 mol), and AMPS (124.35 g, 0.60 mol) were used, and the glass transition temperature (Tg) of the copolymer was 64.6 °C. A molar ratio of the SM-co-MMA-co-EHA-co-AMPS lithium salt was 5:5:30:60. The NV component content in the reaction solution was 9.0 wt% (theoretical value: 10 wt%).

### Preparation Example 7

An acrylic copolymer was prepared in the same manner as in Preparation Example 1, with a difference that SM (20.83 g, 0.20 mol), EHA (55.28 g, 0.30 mol), and AMPS (103.63 g, 0.50 mol) were used without MMA, and the glass transition temperature (Tg) of the copolymer was 60.0 °C. A molar ratio of the SM-co-EHA-co-AMPS lithium salt was 20:30:50. The NV component content in the reaction solution was 9.0 wt% (theoretical value: 10 wt%).

### Comparative Preparation Example 1

An acrylic copolymer was prepared in the same manner as in Preparation Example 1, with a difference that SM (2.08 g, 0.02 mol), MMA (2 g, 0.02 mol), EHA (55.28 g, 0.30 mol), and AMPS (136.785 g, 0.66 mol) were used, and the glass transition temperature (Tg) of the copolymer was 67.1 °C. A molar ratio of the SM-co-MMA-co-EHA-co-AMPS lithium salt was 2:2:30:66. The NV component content in the reaction solution was 9.0 wt% (theoretical value: 10 wt%).

### Comparative Preparation Example 2

An acrylic copolymer was prepared in the same manner as in Preparation Example 1, with a difference that SM (44.26 g, 0.425 mol), MMA (42.55 g, 0.425 mol), EHA (18.43 g, 0.10 mol), and AMPS (10.36 g, 0.05 mol) were used, and the glass transition temperature (Tg) of the copolymer was 85.5 °C. A molar ratio of the SM-co-MMA-co-EHA-co-AMPS lithium salt was 42.5:42.5:10:5. The NV component content in the reaction solution was 9.0 wt% (theoretical value: 10 wt%).

### Comparative Preparation Example 3

An acrylic copolymer was prepared in the same manner as in Preparation Example 1, with a difference that SM (41.66 g, 0.40 mol), MMA (40.05 g, 0.40 mol), EHA (9.21 g, 0.05 mol), and AMPS (31.09 g, 0.15 mol) were used, and the glass transition temperature (Tg) of the copolymer was 102.97 °C. A molar ratio of the SM-co-MMA-co-EHA-co-AMPS lithium salt was 40:40:5:15. The NV component content in the reaction solution was 9.0 wt% (theoretical value: 10 wt%).

### Comparative Preparation Example 4

An acrylic copolymer was prepared in the same manner as in Preparation Example 1, with a difference that SM (20.83 g, 0.20 mol), MMA (20.02 g, 0.20 mol), EHA (82.93 g, 0.45 mol), and AMPS (31.09 g, 0.15 mol) were used, and the glass transition temperature (Tg) of the copolymer was 20.7 °C. A molar ratio of the SM-co-MMA-co-EHA-co-AMPS lithium salt was 20:20:45:15. The NV component content in the reaction solution was 9.0 wt% (theoretical value: 10 wt%).

### Comparative Preparation Example 5

An acrylic copolymer was prepared in the same manner as in Preparation Example 1, with a difference that SM (41.66 g, 0.40 mol), MMA (40.05 g, 0.40 mol), EHA (32.25 g, 0.175 mol), and AMPS (5.18 g, 0.025 mol) were used, and the glass transition temperature (Tg) of the copolymer was 67.3 °C. A molar ratio of the SM-co-MMA-co-EHA-co-AMPS lithium salt was 40:40:17.5:2.5. The NV component content in the reaction solution was 9.0 wt% (theoretical value: 10 wt%).

### Comparative Preparation Example 6

An acrylic copolymer was prepared in the same manner as in Preparation Example 1, with a difference that SM (2.6 g, 0.025 mol), MMA (2.5 g, 0.025 mol), EHA (18.43 g, 0.10 mol), and AMPS (176.16 g, 0.85 mol) were used, and the glass transition temperature (Tg) of the copolymer was 127.3 °C. A molar ratio of the SM-co-MMA-co-EHA-co-AMPS lithium salt was 2.5:2.5:10:85. The NV component content in the reaction solution was 9.0 wt% (theoretical value: 10 wt%).

The following Table 1 shows the molar ratio of monomers in the binders prepared in Preparation Examples 1 to 7 and Comparative Preparation Examples 1 to 6.

**Table 1:**

| | Molar ratio of monomers | | | | Tg (°C) |
|---|---|---|---|---|---|
| | SM | MMA | EHA | AMPS | |
| Preparation Example 1 | 35 | 35 | 20 | 10 | 65.1 |
| Preparation Example 2 | 29 | 29 | 22 | 20 | 65.0 |
| Preparation Example 3 | 23 | 23 | 24 | 30 | 64.0 |
| Preparation Example 4 | 17 | 17 | 26 | 40 | 64.8 |
| Preparation Example 5 | 11 | 11 | 28 | 50 | 64.7 |
| Preparation Example 6 | 5 | 5 | 30 | 60 | 64.6 |
| Preparation Example 7 | 20 | 0 | 30 | 50 | 60.0 |
| Comparative Preparation Example 1 | 2 | 2 | 30 | 66 | 67.1 |
| Comparative Preparation Example 2 | 42.5 | 42.5 | 10 | 5 | 85.5 |
| Comparative Preparation Example 3 | 40 | 40 | 5 | 15 | 102.9 |
| Comparative Preparation Example 4 | 20 | 20 | 45 | 15 | 20.7 |
| Comparative | 40 | 40 | 17.5 | 2.5 | 67.3 |
| Preparation Example 5 | | | | | |
| Comparative Preparation Example 6 | 2.5 | 2.5 | 10 | 85 | 127.3 |

### Example 1

A composition for an adhesive layer was prepared by mixing 10 parts by weight of the binder of Preparation Example 1 and 90 parts by weight of distilled water.

The prepared composition for an adhesive layer was applied on both sides of a polyethylene-based film (thickness: 5.5 µm, CZMZ, air permeability: 110 sec/100 cc, puncture strength: 360 kgf) as a porous substrate using a die coating method at a speed of 80 m/min, and then dried at 60 °C under an absolute water vapor content (average value) of 14 g/m³ to form an adhesive layer with a total thickness of 1.4 µm, thereby manufacturing a separator for a rechargeable lithium battery.

### Examples 2 to 7

Separators for a rechargeable lithium battery were manufactured in the same manner as in Example 1, with a difference that the type of binder was changed in Example 1.

### Comparative Examples 1 to 6

Separators for a rechargeable lithium battery were manufactured in the same manner as in Example 1, with a difference that the type of binder was changed in Example 1.

### Manufacture of battery

### Manufacture of negative electrode:

A negative electrode active material slurry was prepared by mixing 97 wt% of graphite particles with an average particle size of 25 µm as a negative electrode material, 1.5 wt% of a styrene-butadiene rubber (SBR) binder, and 1.5 wt% of carboxymethyl cellulose (CMC), adding the mixture to distilled water, and stirring for 60 minutes using a mechanical stirrer. After applying the slurry onto a 10 µm-thick copper current collector using a doctor blade, the slurry was dried in a hot air dryer at 100 °C for 0.5 hours, additionally dried under vacuum at 120 °C for 4 hours, and then roll-pressed to manufacture a negative electrode.

### Manufacture of positive electrode:

A positive electrode active material slurry was prepared by mixing 97 wt% of LiCoO₂ as a positive electrode material, 1.5 wt% of carbon black powder as a conductive material, and 1.5 wt% of polyvinylidene fluoride (PVdF), adding the mixture to a N-methyl-2-pyrrolidone solvent, and then stirring for 30 minutes using a mechanical stirrer. After applying the slurry onto a 20 µm-thick aluminum current collector using a doctor blade, the slurry was dried in a hot air dryer at 100 °C for 0.5 hours, additionally dried under vacuum at 120 °C for 4 hours, and then roll-pressed to manufacture a positive electrode.

### Electrode assembly jelly roll:

Each of the separators obtained according to Examples and Comparative Examples was interposed between the positive and negative electrodes manufactured above, and then wound to prepare an electrode assembly jelly roll. After inserting the jelly roll into a pouch, an electrolyte was injected, and then the pouch was vacuum-sealed. The electrolyte used was 1.3M LiPF₆ dissolved in a mixed solvent of ethylene carbonate (EC), ethyl methyl carbonate (EMC), and diethyl carbonate (DEC) in a volume ratio of 3:5:2. The jelly roll inserted in the pouch was pressed at a temperature of 80 °C for 3 minutes while applying a pressure of 11.7 kgf/cm² to manufacture a rechargeable lithium battery.

### Air permeability (units: sec/100 cc)

The air permeability of the manufactured separator was measured using a measurement device (EG01-55-1MR, Asahi Seiko Co., Ltd.) by measuring the time (units: seconds) it takes for 100 cc of air to pass through the separator.

### Air permeability measurement device settings:

Measurement pressure: 0.5 kg/cm², Cylinder pressure: 2.5 kg/cm², Set time: 10 seconds

### Electrolyte wettability (units: wt%)

The prepared binder was dried in a 120 °C oven for 12 hours to obtain a film (thickness: 20 µm, initial weight W1 was measured before immersion). The film was placed in the manufactured pouch and impregnated with the electrolyte, and the pouch was vacuum-sealed. After leaving the sealed pouch in a 60 °C oven for 72 hours, the film was immediately taken out, and the weight W2 of the film was measured. The electrolyte wettability was calculated as W2/W1 x 100.

### Adhesion to positive electrode (units: N)

The separator was attached to a positive electrode (manufactured in the same manner as the "Manufacture of battery") and inserted into the pouch, and then an electrolyte (1.3M LiPF₆ dissolved in a mixed solvent of ethylene carbonate (EC)/ethyl methyl carbonate (EMC)/diethyl carbonate (DEC) in a 3/5/2 volume ratio) was injected and left for 12 hours. The assembly was then pressed under conditions of a pressure of 10 kgf/cm² to 20 kgf/cm² and a temperature of 70 °C to 90 °C for 5 seconds to 20 seconds, and then disassembled. After taking the separator and the positive electrode out of the pouch, the positive electrode and the separator were spread out 180°, and the force required to detach the positive electrode from the separator was measured using a tensile tester (HT400, Tinius Olsen).

### Membrane resistance (units: Ω)

The membrane resistance was evaluated as electrochemical impedance spectroscopy (EIS) resistance. Each of the separators manufactured in Examples and Comparative Examples was impregnated with an electrolyte of 1.5M LiPF₆ dissolved in a mixed solvent of ethylene carbonate, ethyl methyl carbonate, and dimethyl carbonate (volume ratio 3/5/2), and then fitted onto an aluminum foil electrode with a lead tab and sealed in an aluminum pack to manufacture a test cell. The resistance (Ω) of this test cell was measured at 20 °C using the alternating current impedance method (measurement frequency of 100 kHz).

### Capacity retention rate after 200 cycles (units: %)

For the batteries manufactured using the separators of Examples and Comparative Examples, constant current charging was performed at a 0.5 C rate at 25 °C and 45 °C until the voltage reached 4.2 V, and then cut off at a 0.025 C rate in a constant voltage mode. Afterward, discharging was performed at a 0.5 C rate until the voltage reached 2.5 V, and this cycle was repeated 200 times, and the capacity retention rate according to the number of cycles, that is, lifespan characteristics, was evaluated, and the results were obtained.

### Direct current internal resistance (DC-IR, units: mΩ)

In order to measure the DC-IR, the batteries with a cell capacity of 75 mAh, which were manufactured using the separators of Examples and Comparative Examples, were charged at 25 °C and 45 °C at a constant current/constant voltage of 0.2 C and 4.25 V under 0.05 C cut-off conditions, and after resting for 10 minutes, the batteries were discharged at a constant current of 0.33 C under 2.80 V cut-off conditions and allowed to rest for 10 minutes. After one charge-discharge cycle, the DC-IR was measured at SOC50 (state of charge 50%, which means the battery is charged to 50% of its total capacity, or equivalently, discharged by 50%) by applying a current at 1 C for 10 seconds and measuring the resulting voltage drop (V).

The DC-IR change rate is the ratio of the DC-IR after 200 cycles to the initial DC-IR, and is expressed as a percentage.

**Table 2:**

| | | Examples | | | | | | |
|---|---|---|---|---|---|---|---|---|
| | | 1 | 2 | 3 | 4 | 5 | 6 | 7 |
| Binder | | Preparation Example 1 | Preparation Example 2 | Preparation Example 3 | Preparation Example 4 | Preparation Example 5 | Preparaation Example 6 | Preparation Example 7 |
| Total thickness of adhesive layer | | 1.4 | 1.4 | 1.4 | 1.4 | 1.4 | 1.4 | 1.4 |
| Air permeability | | 133 | 134 | 132 | 133 | 133 | 135 | 136 |
| Electrolyte wettability | | 283 | 248 | 210 | 185 | 152 | 139 | 171 |
| Adhesion to positive electrode | | 1.14 | 1.12 | 1.13 | 1.15 | 0.98 | 0.90 | 0.82 |
| Membrane resistance in impregnation with electrolyte | | 0.61 | 0.5 | 0.46 | 0.42 | 0.4 | 0.37 | 0.44 |
| 25 ° C | Capacity retention rate (%) | 85 | 88 | 91 | 92 | 90 | 89 | 76 |
| | Initial DC-IR (mΩ) | 3.51 | 2.88 | 2.65 | 2.42 | 2.30 | 2.13 | 2.53 |
| | DC-IR after 200 cycles (mΩ) | 7.72 | 6.04 | 5.58 | 5.00 | 4.60 | 4.15 | 5.26 |
| | DC-IR change rate after 200 cycles (%) | 220 | 210 | 211 | 207 | 200 | 195 | 208 |
| 45 ° C | Capacity retention rate (%) | 71 | 73 | 76 | 77 | 75 | 74 | 63 |
| | Initial DC-IR (mΩ) | 3.19 | 2.61 | 2.40 | 2.20 | 2.09 | 1.93 | 2.30 |
| | DC-IR after 200 cycles (mΩ) | 10.52 | 8.23 | 7.61 | 6.82 | 6.27 | 5.66 | 7.18 |
| | DC-IR change rate after 200 cycles (%) | 330 | 315 | 317 | 311 | 300 | 293 | 312 |

**Table 3:**

| | | Comparative Examples | | | | | |
|---|---|---|---|---|---|---|---|
| | | 1 | 2 | 3 | 4 | 5 | 6 |
| Binder | | Comparative Preparation n Example 1 | Comparative Preparation Example 2 | Comparative Preparation Example 3 | Comparative Preparation Example 4 | Comparative Preparation Example 5 | Comparative Preparation Example 6 |
| Total thickness of adhesive layer | | 1.4 | 1.4 | 1.4 | 1.4 | 1.4 | 1.4 |
| Air permeability | | 131 | 128 | 126 | 320 | 134 | 125 |
| Electrolyte wettability | | 126 | 321 | 305 | 410 | 334 | 105 |
| Adhesion to positive electrode | | 0.78 | 0.61 | 0.55 | 3.01 | 1.11 | 0.35 |
| Membrane resistance in impregnation with electrolyte | | 0.34 | 0.81 | 1.5 | 2.8 | 0.88 | 3.2 |
| 25 °C | Capacity retention rate (%) | 80 | 70 | 45 | 50 | 89 | 40 |
| | Initial DC-IR (mΩ) | 1.96 | 4.66 | 8.63 | 16.10 | 5.06 | 18.40 |
| | DC-IR after 200 cycles (mΩ) | 3.95 | 14.11 | 34.50 | 80.50 | 15.18 | 82.80 |
| | DC-IR change rate after 200 cycles (%) | 202 | 303 | 400 | 500 | 300 | 450 |
| 45 °C | Capacity retention rate (%) | 67 | 58 | 38 | 42 | 74 | 33 |
| | Initial DC-IR (mΩ) | 1.78 | 4.23 | 7.84 | 14.64 | 4.60 | 16.73 |
| | DC-IR after 200 cycles (mΩ) | 5.39 | 19.24 | 47.05 | 109.77 | 20.70 | 112.91 |
| | DC-IR change rate after 200 cycles (%) | 303 | 455 | 600 | 750 | 450 | 675 |

As shown in Table 2 above, the separators of the Examples exhibited low membrane resistance, which may improve the capacity, safety, and lifespan of the battery. In addition, the separators for a rechargeable lithium battery of the Examples showed high adhesion to an electrode, such as the positive electrode, which may increase reliability.

As shown in Table 3 above, the separators of the Comparative Examples could not achieve the effects of the separators of the Examples.

According to an example embodiment of the present disclosure, the separator for a rechargeable lithium battery can improve the capacity, safety, and lifespan of a battery by exhibiting low membrane resistance, high electrolyte wettability, improved flexibility, high adhesion, and high capacity retention rates and low DC internal resistance change rates at both room temperature and high temperature.

Although the example embodiments of the present disclosure have been described above, the present disclosure is not limited thereto, and various modifications are possible within the scope of the claims, detailed description, and attached drawings of the disclosure, and these modifications also fall within the scope of the present disclosure.

## Claims

1. A separator for a rechargeable lithium battery, the separator comprising:
a porous substrate; and
a coating layer located on at least one surface of the porous substrate,
wherein the coating layer includes a binder,
the binder includes a copolymer including a first structural unit comprising a unit derived from an aromatic-based unsaturated monomer; a second structural unit derived from a (meth)acrylic monomer containing an alkyl group with 4 or more carbon atoms in the main chain of the ester moiety; and a third structural unit derived from a sulfonic acid group-containing monomer, and
based on 100 mol% of the copolymer, the first structural unit is included in an amount in a range of from about 5 mol% to about 80 mol%, the second structural unit is included in an amount in a range of from about 10 mol% to about 40 mol%, and the third structural unit is included in an amount in a range of from about 5 mol% to about 80 mol%.

2. The separator of claim 1, wherein the copolymer comprises a particulate binder.

3. The separator of claim 1 or 2, wherein the copolymer has an average particle size D50 in a range of from about 500 nm to about 700 nm.

4. The separator of any one of claims 1 to 3, wherein the copolymer is an adhesive binder.

5. The separator of any one of claims 1 to 4, wherein the copolymer has a glass transition temperature in a range of from about 60 °C to about 80 °C.

6. The separator of any one of claims 1 to 5, wherein the copolymer is included in an amount in a range of from about 1 wt% to about 100 wt% of the coating layer.

7. The separator of any one of claims 1 to 6, wherein the sum of the content of the first structural unit, the second structural unit, and the third structural unit is about 95 mol% or more based on the copolymer.

8. The separator of any one of claims 1 to 7, wherein the unit derived from the aromatic-based unsaturated monomer is represented by the following Chemical Formula 1: 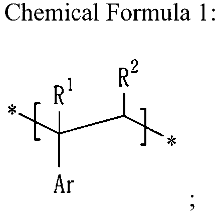 in Chemical Formula 1,
R¹ and R² each independently comprises hydrogen or a substituted or unsubstituted C₁ to C₅ alkyl group, and
Ar comprises a substituted or unsubstituted, monocyclic or polycyclic C₆ to C₂₀ aryl group,
the second structural unit is represented by the following Chemical Formula 4: 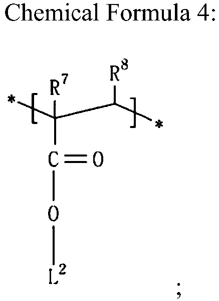
in Chemical Formula 4,
R⁷ and R⁸ each independently comprises hydrogen or a methyl group, and
L² comprises a substituted or unsubstituted, straight or branched C₄ to C₃₀ alkyl group, and
the third structural unit is represented by any one of the following Chemical Formulas 5 to 7: 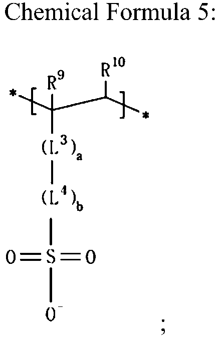 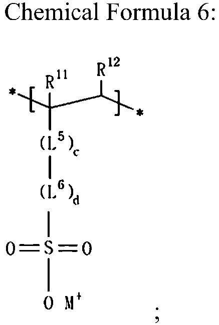 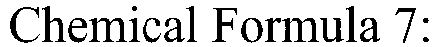 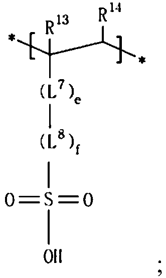
in Chemical Formulas 5 to 7,
R⁹, R¹⁰, R¹¹, R¹², R¹³, and R¹⁴ each independently comprises hydrogen or a C₁ to C₃ alkyl group,
L³, L⁵, and L⁷ each independently comprises -C(=O)-, -C(=O)O-, -OC(=O)-, -O-, or -C(=O)NH-,
L⁴, L⁶, and L⁸ each independently comprises a substituted or unsubstituted C₁ to C₁₀ alkylene group, a substituted or unsubstituted C₃ to C₂₀ cycloalkylene group, a substituted or unsubstituted C₆ to C₂₀ arylene group, or a substituted or unsubstituted C₃ to C₂₀ heterocyclic group,
a, b, c, d, e and f are each independently an integer in a range from 0 to 2, and
in Chemical Formula 6,
M comprises an alkali metal.

9. The separator of any one of claims 1 to 8, wherein the first structural unit further includes a unit derived from a (meth)acrylic monomer containing an alkyl group having 1 to 3 carbon atoms in the main chain of the ester moiety.

10. The separator of claim 9, wherein the unit derived from the (meth)acrylic monomer is represented by the following Chemical Formula 3: 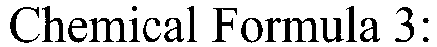 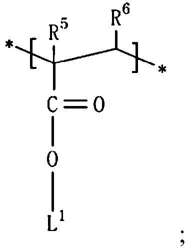 in Chemical Formula 3,
R⁵ and R⁶ each independently comprises hydrogen or a methyl group, and
L¹ comprises a substituted or unsubstituted, straight or branched C₁ to C₃ alkyl group.

11. The separator of claim 9 or 10, wherein the unit derived from the aromatic-based unsaturated monomer and the unit derived from the (meth)acrylic monomer are included in a molar ratio in a range of from about 1: 0.5 to about 1 : 2.

12. The separator of any one of claims 9 to 11, wherein based on 100 mol% of the copolymer, the structural unit derived from the aromatic-based unsaturated monomer is included in an amount in a range of from about 5 mol% to about 35 mol%, the structural unit derived from the (meth)acrylic monomer containing an alkyl group having 1 to 3 carbon atoms in the main chain of the ester moiety is included in an amount in a range of from about 5 mol% to about 35 mol%, the second structural unit is included in an amount in a range of from about 20 mol% to about 30 mol%, and the third structural unit is included in an amount in a range of from about 10 mol% to about 60 mol%.

13. The separator of any one of claims 9 to 12, wherein the copolymer comprises:
the structural unit derived from the aromatic-based unsaturated monomer derived from one or more of styrene, alpha-methyl styrene, 4-butyl styrene, 4-butoxy styrene, halo styrene, vinyl toluene, and vinyl naphthalene;
the structural unit derived from the (meth)acrylic monomer containing an alkyl group having 1 to 3 carbon atoms in the main chain of the ester moiety, which is derived from one or more of methyl (meth)acrylate, ethyl (meth)acrylate, n-propyl (meth)acrylate, and iso-propyl (meth)acrylate;
the second structural unit derived from one or more of 2-ethylhexyl (meth)acrylate, n-butyl (meth)acrylate, iso-butyl (meth)acrylate, tert-butyl (meth)acrylate, pentyl (meth)acrylate, hexyl (meth)acrylate, heptyl (meth)acrylate, n-octyl (meth)acrylate, nonyl (meth)acrylate, isononyl (meth)acrylate, decyl (meth)acrylate, and isodecyl (meth)acrylate; and
the third structural unit derived from at least one of vinyl sulfonic acid, allyl sulfonic acid, styrene sulfonic acid, anethole sulfonic acid, (meth)acrylamidoalkane sulfonic acid, sulfoalkyl (meth)acrylate, and a salt thereof.

14. The separator of any one of claims 1 to 13, wherein the coating layer has a thickness in a range of from about 0.1 µm to about 1.5 µm.

15. A rechargeable lithium battery comprising:
a positive electrode;
a negative electrode; and
the separator for a rechargeable lithium battery according to any one of claims 1 to 14 interposed between the positive electrode and the negative electrode.
